# EUROPEAN PATENT APPLICATION

(11) **EP 4 119 401 A1**
(43) Date of publication of application: **18.01.2023**
(21) Application number: 21768275.6
(22) Date of filing: 02.03.2021
(51) Int. Cl.: B60R 19/24

(54) **REAR BUMPER MOUNTING SYSTEM AND VEHICLE**

(30) Priority: 11.03.2020 CN 202010168024
(71) Applicant: PSA Automobiles SA, 78300 Poissy (FR)
(72) Inventor: YIN, Junlong, Shanghai 200233 (CN); WANG, Hongri, Shanghai 200233 (CN); JIANG, Huanjun, Shanghai 200233 (CN); YAN, Jing, Shanghai 200233 (CN); WANG, Liting, Shanghai 200233 (CN)
(86) International application number: PCT/CN2021/078593
(87) International publication number: WO 2021/179946

(57) **Abstract**

A rear bumper mounting system, comprising: a rear bumper, a rear bumper skin, a tail light support, and a rear bumper side support; the rear bumper skin is formed by a first portion, a second portion and a third portion along a parting line between the rear bumper skin and a vehicle tail light; the first portion extends in a Y direction, the third portion extends in an X direction, and the second portion connects the first portion and the third portion; the tail light support is mounted at a vehicle tail part and is connected to the rear bumper by connecting with the rear bumper skin, and the tail light support and the first portion are assembled with respect to the X direction; the rear bumper side support is provided at sides of the vehicle tail part, used for supporting the rear bumper, and assembled with the third portion with respect to the Y direction while ensuring the positioning of the second portion with respect to the tail light.

## Description

### CROSS-REFERENCE TO RELATED APPLICATION

The present application claims priority to Chinese patent application, No. 202010168024.3, filed on March 11, 2020 and entitled "Rear Bumper Mounting System and Vehicle", which is hereby incorporated by reference in entirety.

### TECHNICAL FIELD

The present application relates to the field of vehicle spare parts, and in particular, to a rear bumper mounting system in which a cutting line between a rear bumper skin and a vehicle rear lamp is a broken line.

### BACKGROUND

In the case where a cutting line between a vehicle rear bumper skin and a vehicle rear lamp is smooth and similar to a straight line, a traditional clipping connection is generally applied to a connection between a rear bumper side bracket and the rear bumper skin as well as between the rear lamp and the rear bumper skin, and then a position of the rear bumper skin may be controlled and then a gap flush between the rear bumper skin and the rear lamp may be controlled. However, when the cutting line between the rear bumper skin and the vehicle rear lamp is a broken line, since the rear bumper skin near a corner of the cutting line lacks bracket support behind, the position of the rear bumper skin cannot be controlled at this area. Even if a bracket is provided on a back of the rear bumper skin at this area, more force will be required when the traditional clipping connection is applied, which will make this area hard to assemble.

Therefore, a new rear bumper mounting system is required, which can effectively ensure the gap flush between the rear bumper skin and the rear lamp even when the cutting line between the rear bumper skin and the rear lamp is a broken line.

### SUMMARY

### (1) Problems to be solved

The first objective of the present application is to provide a rear bumper mounting system having a simple structure and being easy to assemble, to solve the problem in that a rear bumper skin near a corner of a cutting line between the rear bumper skin and a vehicle rear lamp is hard to assemble when the cutting line is a broken line.

The second objective of the present application is to provide a vehicle including the above rear bumper mounting system having a simple structure and being easy to assemble, to solve the problem in that a rear bumper skin near a corner of a cutting line between the rear bumper skin and a vehicle rear lamp is hard to assemble when the cutting line is a broken line.

### (2) Solutions

In order to solve the above problems, the present application provides a rear bumper mounting system, including: a rear bumper; a rear bumper skin having a first portion, a second portion and a third portion along a cutting line between the rear bumper skin and a vehicle rear lamp, where the first portion extends along Y direction, the third portion extends along X direction, i.e. a vehicle body direction, and the second portion connects the first portion and the third portion; a rear lamp bracket, mounted at a rear of the vehicle and connected to the rear bumper by connecting to the rear bumper skin, and the rear lamp bracket is assembled with the first portion relative to the X direction; and a rear bumper side bracket, arranged at a side of the rear of the vehicle to support the rear bumper, and assembled with the third portion relative to the Y direction while ensuring positioning of the second portion relative to the rear lamp.

In an embodiment, the rear bumper side bracket includes a first bracket part and a second bracket part extending from the first bracket part to the second portion, where the first bracket part is connected to the third portion and the second bracket part is connected to the second portion.

In an embodiment, the second bracket part is provided with a third clip part near a corner of the cutting line, and the third clip part includes: a third protruding part extending vertically from a surface of the second bracket part; and a third hook part extending vertically to the third protruding part from one end of the third protruding part and forming an upwardly extending hook at a tail end.

In an embodiment, the second portion is provided with a fourth clip part corresponding to the third clip part, and the fourth clip part includes: a fourth protruding part extending vertically from a surface of the rear bumper skin; and a fourth hook part extending vertically to the fourth protruding part from one end of the fourth protruding part and forming a downwardly extending hook at a tail end.

In an embodiment, the first portion of the rear bumper skin is provided with a first clip hole to connect to the rear lamp bracket in a clipping connection manner.

In an embodiment, the rear lamp bracket is provided with a first clip part corresponding to the first clip hole, and the first portion is fixed by the connection of the first clip part and the first clip hole.

In an embodiment, the third portion of the rear bumper skin is provided with a second clip hole, to connect to the first bracket part in a clipping connection manner.

In an embodiment, the first bracket part is provided with a second clip part corresponding to the second clip hole, and the third portion is fixed by the connection of the second clip part and the second clip hole.

The present application also provides a vehicle including the rear bumper mounting system according to the application.

### (3) Beneficial effects

The present application provides a rear bumper mounting system, including: a rear bumper; a rear bumper skin having a first portion, a second portion and a third portion along a cutting line between the rear bumper skin and a vehicle rear lamp, where the first portion extends along Y direction, the third portion extends along X direction, and the second portion connects the first portion and the third portion; a rear lamp bracket, mounted at a rear of the vehicle and connected to the rear bumper by connecting to the rear bumper skin, where the rear lamp bracket is assembled with the first portion relative to the X direction; and a rear bumper side bracket, arranged at a side of the rear of the vehicle to support the rear bumper, and assembled with the third portion relative to the Y direction while ensuring positioning of the second portion relative to the rear lamp. The rear bumper mounting system provided by the present application has a simple structure, requires no additional cost, and is easy to assemble.

### BRIEF DESCRIPTION OF DRAWINGS

The above and other objectives, features and advantages of the present disclosure will be more clearly understood from the following detailed description, taken in conjunction with the accompanying drawings.
FIG. 1 is a schematic diagram of a rear bumper skin and a rear lamp bracket according to embodiments of the present application.
FIG. 2 is a schematic diagram of a rear bumper mounting system and a vehicle rear lamp according to embodiments of the present application.
FIG. 3 is a schematic diagram of a rear bumper side bracket according to embodiments of the present application.
FIG. 4 is a schematic diagram of a third clip part and a fourth clip part according to embodiments of the present application.
FIG. 5 is a schematic diagram of a third clip part according to embodiments of the present application.
FIG. 6 is a schematic diagram of a fourth clip part according to embodiments of the present application.
FIG. 7 is a schematic cross section of a third clip part and a fourth clip part vertical to a contacting surface of the third clip part and the fourth clip part according to embodiments of the present application.

Reference numerals: 1-rear bumper skin; 2-vehicle rear lamp; 3-cutting line; 4-first portion; 5-second portion; 6-third portion; 7-rear lamp bracket; 8-first clip part; 9-rear bumper side bracket; 10-first bracket part; 11-second bracket part; 12-third clip part; 13-third protruding part; 14-third hook part; 15-fourth clip part; 16-fourth protruding part; 17-fourth hook part.

### DETAILED DESCRIPTION OF THE EMBODIMENTS

In order to make the objectives, solutions and advantages according to the embodiments of the present application more clear, the solutions according to the embodiments of the present application will be described clearly and completely below in conjunction with the accompanying drawings in the embodiments of the present application, and it should be noted that the embodiments described are some of the embodiments of the present application rather than all of them. Based on the embodiments of the present application, all other embodiments obtained by those of ordinary skill in the art without creative effort fall within the scope of protection of the present application.

In the description of the present application, it is to be noted that, the orientation or positional relations specified by terms such as "central", "longitudinal", "transverse", "upper", "lower", "front", "back", "left", "right", "vertical", "horizontal", "top", "bottom", "inner", "outer" and the like, are based on the orientation or positional relations shown in the drawings, which is merely for convenience of description of the present application and to simplify description, but does not indicate or imply that the stated devices or components must have the particular orientation and be constructed and operated in the particular orientation, and thus it is not to be construed as limiting the present application. Furthermore, the terms "first", "second", "third" and the like are only used for descriptive purposes and should not be construed as indicating or implying a relative importance.

The present application provides a rear bumper mounting system, including: a rear bumper; a rear bumper skin having a first portion, a second portion and a third portion along a cutting line between the rear bumper skin and a vehicle rear lamp, where the first portion extends along Y direction, the third portion extends along X direction, and the second portion connects the first portion and the third portion; a rear lamp bracket, mounted at a rear of the vehicle and connected to the rear bumper by connecting to the rear bumper skin, and the rear lamp bracket is assembled with the first portion relative to the X direction; and a rear bumper side bracket, arranged at a side of the rear of the vehicle to support the rear bumper, and assembled with the third portion relative to the Y direction while ensuring positioning of the second portion relative to the rear lamp.

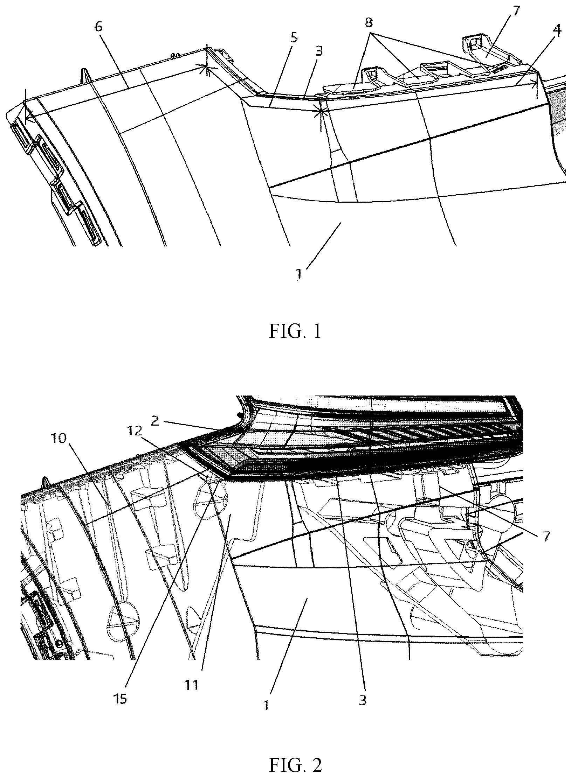

In an embodiment, as shown in FIG. 1, a cutting line 3 between a rear bumper skin 1 and a vehicle rear lamp 2 (not shown in FIG. 1 ) is a broken line. The rear bumper skin 1 can be divided into three portions including a first portion 4, a second portion 5 and a third portion 6 along the cutting line 3, where the first portion 4 extends along Y direction, the third portion 6 extends along X direction, and the second portion 5 is a transition area between the first portion 4 and the third portion 6.

As shown in FIG. 1 and FIG. 2, the vehicle rear lamp 2 is connected above a rear lamp bracket 7. The rear lamp bracket 7 and the vehicle rear lamp 2 are initially mounted at the rear of the vehicle, and then the assemble of the rear bumper skin 1 in X direction is realized by assembling the rear lamp bracket 7 with the first portion 4 relative to the X direction. Since the rear bumper skin 1 and the rear bumper have already been assembled together and both of them are part of the rear bumper assembly, that a portion of the rear bumper assembly is assembled in X direction at the rear of the vehicle is realized finally. X direction is the main mounting direction of the rear bumper assembly. The first portion 4 of the rear bumper skin 1 is provided with a first clip hole to connect to the rear lamp bracket 7 in a clipping connection manner. The rear lamp bracket 7 is provided with a first clip part 8 corresponding to the first clip hole, and the first portion 4 is fixed by the connection of the first clip part 8 and the first clip hole. In an embodiment, the rear lamp bracket 7 and the first portion 4 is connected in a traditional manner. For example, a flange of the first portion 4 of the rear bumper skin 1 is provided with three first clip holes, and a corresponding position at the rear lamp bracket 7 is provided with three first clip parts 8. During assembly, the first clip part 8 on the rear lamp bracket 7 is stuck in the first clip hole. As shown in FIG. 1, the rear lamp bracket 7 controls a position of the rear bumper skin 1 here through three first clip parts 8, and then controls a gap flush between the rear bumper skin 1 and the vehicle rear lamp 2.

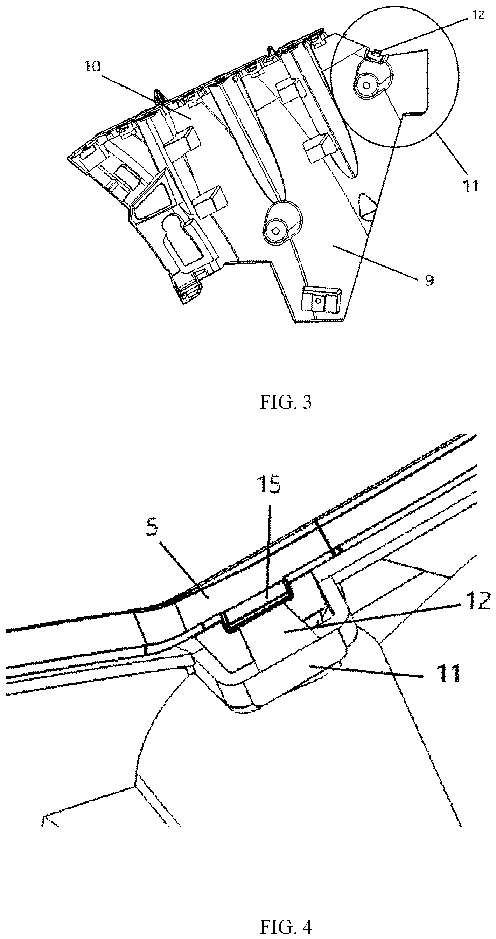

As shown in FIG. 2 and FIG. 3, a rear bumper side bracket 9 includes a first bracket part 10 and a second bracket part 11 extending from the first bracket part 10 to the second portion 5, where the first bracket part 10 is connected to the third portion 6 and the second bracket part 11 is connected to the second portion 5. When the cutting line 3 between the rear bumper skin 1 and the vehicle rear lamp 2 is smooth and similar to a straight line, the second portion 5 as the transition area does not appear in generally, and there are only the first portion 4 and the third portion 6. At this time, only the first bracket part 10 of the rear bumper side bracket 9 and the rear lamp bracket 7 are enough to control the gap flush between the rear bumper skin 1 and the vehicle rear lamp 2. Since the second portion 5 is appeared, and the rear lamp bracket 7 cannot extend along the vehicle rear lamp 2, which means that there is no bracket behind the second portion 5. At this area, the position of the rear bumper skin 1 cannot be controlled. Even if a bracket is provided on a back of the rear bumper skin 1 at this area, it will require more force and it will be hard to assemble if a traditional clipping connection is used. In an embodiment, the second bracket part 11 is formed by the rear bumper side bracket 9 extending along the direction of the second portion 5. The first bracket part 10 and the third portion 6 are connected by the traditional clipping connection as same as the connection between the rear lamp bracket 7 and the first portion 4. In an embodiment, the first bracket part 10 is provided with 4 second clip parts and the third portion 6 is provided with 4 second clip holes, and the first bracket part 10 and the third portion 6 are connected by the traditional clipping connection through the 4 second clip parts and 4 second clip holes, and then that the rear bumper assembly is assembled at the rear of the vehicle in Y direction is realized finally.

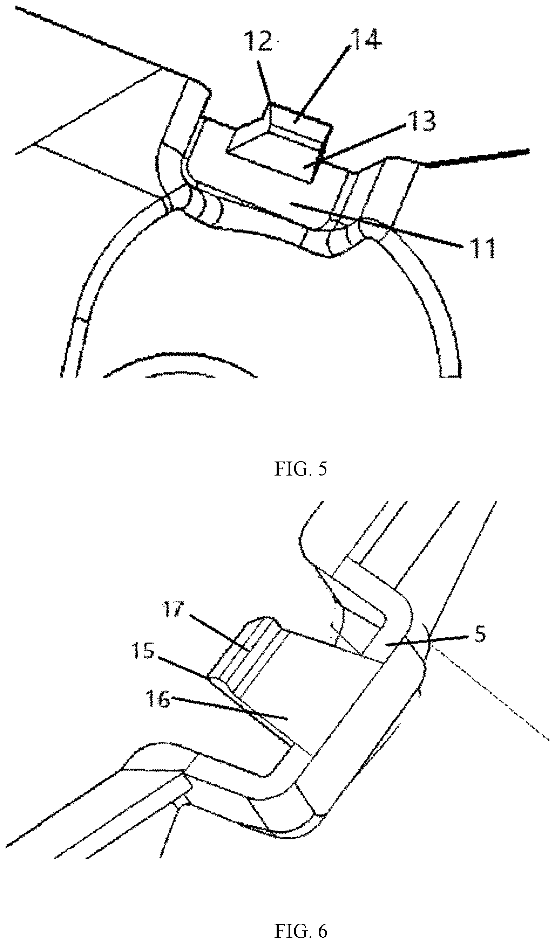

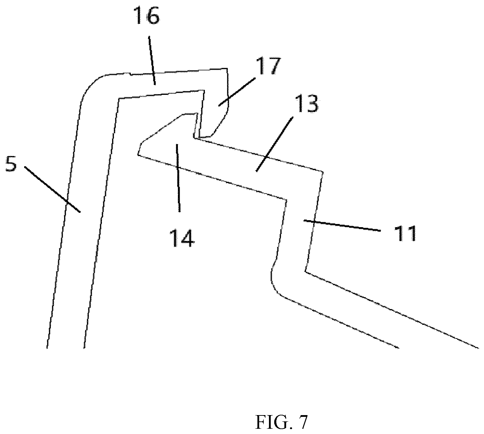

In an embodiment, the second bracket part 11 and the second portion 5 are also connected in the clipping connection manner, however, the connection structure of which differs from that of the first clip part 8 and the second clip part described above. As shown in FIG. 4, the second bracket part 11 is provided with a third clip part 12 near a corner of the cutting line 3. As shown in FIG. 5, the third clip part 12 includes: a third protruding part 13 extending vertically from a surface of the second bracket part 11; and a third hook part 14 extending vertically to the third protruding part from one end of the third protruding part 13 and forming an upwardly extending hook at a tail end. Accordingly, the second portion 5 of the rear bumper skin 1 is provided with a fourth clip part 15 corresponding to the third clip part 12, as shown in FIG. 6. The fourth clip part 15 includes: a fourth protruding part 16 extending vertically from a surface of the rear bumper skin 1; and a fourth hook part 17 extending vertically to the fourth protruding part 16 from one end of the fourth protruding part 16 and forming a downwardly extending hook at a tail end. A hook of the third clip part 12 is hooked together with a hook of the fourth clip part 15 to form a clipping connection. As shown in FIG. 7, in a cross section vertical to a contacting surface of the third clip part 12 and the fourth clip part 15, the shape of the connection between the third clip part 12 and the fourth clip part 15 is similar to two upside down letters "L".

On the other hand, the present application also provides a vehicle including a rear bumper mounting system according to embodiments of the application.

In summary, the present application provides a rear bumper mounting system, including: a rear bumper; a rear bumper skin having a first portion, a second portion and a third portion along a cutting line between the rear bumper skin and a vehicle rear lamp, where the first portion extends along Y direction, the third portion extends along X direction, and the second portion connects the first portion and the third portion; a rear lamp bracket, mounted at a rear of the vehicle and connected to the rear bumper by connecting to the rear bumper skin, where the rear lamp bracket is assembled with the first portion relative to the X direction; and a rear bumper side bracket, arranged at a side of the rear of the vehicle to support the rear bumper, and assembled with the third portion relative to the Y direction while ensuring positioning of the second portion relative to the rear lamp. The rear bumper mounting system provided by the present application has a simple structure, requires no additional cost, and is easy to assemble.

Finally, it should be noted that the above embodiments are only used to illustrate the solutions of the present application, but not to limit them; although the present application has been described in detail with reference to the foregoing embodiments, those of ordinary skill in the art should understand that the solutions recorded by the foregoing embodiments can be modified, or some of the features therein can be equivalently replaced; and these modifications or replacements do not make the essence of the corresponding solutions depart from the scope of the solutions of various embodiments of the present application.

## Claims

1. A rear bumper mounting system, comprising:
a rear bumper;
a rear bumper skin having a first portion, a second portion and a third portion along a cutting line between the rear bumper skin and a vehicle rear lamp, wherein the first portion extends along Y direction, the third portion extends along X direction, and the second portion connects the first portion and the third portion;
a rear lamp bracket, mounted at a rear of the vehicle and connected to the rear bumper by connecting to the rear bumper skin, and the rear lamp bracket is assembled with the first portion relative to the X direction; and
a rear bumper side bracket, arranged at a side of the rear of the vehicle to support the rear bumper, and assembled with the third portion relative to the Y direction while ensuring positioning of the second portion relative to the rear lamp.

2. The rear bumper mounting system according to claim 1, wherein,
the rear bumper side bracket comprises a first bracket part and a second bracket part extending from the first bracket part to the second portion, wherein the first bracket part is connected to the third portion and the second bracket part is connected to the second portion.

3. The rear bumper mounting system according to claim 2, wherein,
the second bracket part is provided with a third clip part near a corner of the cutting line, and the third clip part comprises:
a third protruding part extending vertically from a surface of the second bracket part; and
a third hook part extending vertically to the third protruding part from one end of the third protruding part and forming an upwardly extending hook at a tail end.

4. The rear bumper mounting system according to claim 1, wherein,
the second portion is provided with a fourth clip part corresponding to the third clip part, and the fourth clip part comprises:
a fourth protruding part extending vertically from a surface of the rear bumper skin; and
a fourth hook part extending vertically to the fourth protruding part from one end of the fourth protruding part and forming a downwardly extending hook at a tail end.

5. The rear bumper mounting system according to claim 1, wherein,
the first portion of the rear bumper skin is provided with a first clip hole to connect to the rear lamp bracket in a clipping connection manner.

6. The rear bumper mounting system according to claim 5, wherein,
the rear lamp bracket is provided with a first clip part corresponding to the first clip hole, and the first portion is fixed by the connection of the first clip part and the first clip hole.

7. The rear bumper mounting system according to claim 1, wherein,
the third portion of the rear bumper skin is provided with a second clip hole to connect to the first bracket part in a clipping connection manner.

8. The rear bumper mounting system according to claim 7, wherein,
the first bracket part is provided with a second clip part corresponding to the second clip hole, and the third portion is fixed by the connection of the second clip part and the second clip hole.

9. A vehicle, comprising the rear bumper mounting system according to any one of claims 1-8.
